Europäisches Patentamt

European Patent Office

Office européen des brevets

(11) Veröffentlichungsnummer: **0 512 344 A1**

## (12) EUROPÄISCHE PATENTANMELDUNG

(21) Anmeldenummer: **92107100.7**

(51) Int. Cl.⁵: **G01P 15/125**

(22) Anmeldetag: **25.04.92**

(30) Priorität: **20.03.92 DE 4209018**
**03.05.91 DE 4114411**

(43) Veröffentlichungstag der Anmeldung:
**11.11.92 Patentblatt 92/46**

(84) Benannte Vertragsstaaten:
**DE FR GB**

(71) Anmelder: **ROBERT BOSCH GMBH**
**Postfach 30 02 20**
**W-7000 Stuttgart 30(DE)**

(72) Erfinder: **Jansche, Walter**
**Pestalozzistrasse 7**
**W-7552 Durmersheim(DE)**
Erfinder: **Zabler, Erich**
**Brunhildstrasse 11**
**W-7513 Stutensee B1(DE)**
Erfinder: **Gerlach, Guenter**
**Fliederweg 8**
**W-7550 Rastatt(DE)**
Erfinder: **Widder, Johannes**
**Waldstrasse 52**
**W-7500 Karlsruhe 1(DE)**

(54) **Sensor zum selbsttätigen Auslösen von Insassenschutzvorrichtungen bei einem Unfall.**

(57) Bei einem Sensor (11) zum selbsttätigen Auslösen von Insassenschutzvorrichtungen in Kraftfahrzeugen bei einem Unfall, ist im Mittelpunkt eines abgeschlossenen, vollständig mit Dämpfungsflüssigkeit (17) gefüllten Innenraums (12) ein Pendel (19) aufgehängt, das immer in Richtung des Scheinlots ausgerichtet ist. Am Pendel (19) ist eine Gegenelektrode (22) befestigt, die einen scheibenartigen Bereich (26) und einen Fortsatz (27) aufweist. Diese Gegenelektrode (22) steht in Wirkverbindung mit drei Elektroden (23, 24, 25). Die Elektroden (23, 24) sind sichelförmig ausgebildet, wobei ihre Fläche gegensinnig sich verändert. Bei Veränderung der relativen Lage der Gegenelektrode (22) gegenüber den Elektroden (23, 24) wird das Überdeckungsverhältnis um denselben Betrag aber mit entgegengesetztem Vorzeichen verändert. Dadurch können in einer Meßschaltung Meßfehler eliminiert werden. Der Sensor baut besonders einfach und preisgünstig.

FIG. 1

## Stand der Technik

Die Erfindung geht aus von einem Sensor zum selbsttätigen Auslösen von Insassenschutzvorrichtungen bei einem Unfall nach der Gattung des Hauptanspruchs. Aus der DE-OS 36 04 216.1 ist ein derartiger Sensor bekannt, bei dem ein tief abgestimmtes, als seismische Masse dienendes Schwerependel in einem mit Flüssigkeit gefüllten Raum aufgehängt ist. Dabei ist die Dämpfung durch die Flüssigkeit nur bei translatorischer Bewegung der Pendelaufhängung und der seismischen Masse und nicht bei deren Rotation wirksam. Gemessen wird die Neigung des Fahrzeugs, in dem der Sensor befestigt ist, gegenüber dem sogenannten Scheinlot. Hierzu wird die Drehung des Pendels um eine Achse bestimmt. Diese Achse fällt mit der Drehachse des Pendels zusammen. Dadurch baut der Sensor relativ kompliziert. Ferner treten Meßfehler durch Umwelteinflüsse, zum Beispiel durch Temperaturschwankungen auf.

## Vorteile der Erfindung

Der erfindungsgemäße Sensor mit den kennzeichnenden Merkmalen des Hauptanspruchs hat demgegenüber den Vorteil, daß er relativ einfach und preisgünstig baut. Die drei Elektroden des kapazitiven Abgriffsystems können in einfacher Weise an der Innenwand des Gehäuses angeordnet werden. Hierbei können die unterschiedlichsten Techniken verwendet werden. Durch die sich gegensinnig ändernde Form der beiden Elektroden können relativ große Drehwinkel bestimmt werden. Auftretende Meßfehler, sowohl durch äußere Umwelteinflüsse, wie Temperaturschwankungen als auch durch Toleranzprobleme, werden in einfachster Weise kompensiert. Die am Pendel angebrachte Gegenelektrode kann in einfacher Weise in die wirksame seismische Masse konstruktiv mit eingearbeitet werden. Die Lagerung des Pendels wird stark vereinfacht. In das Ausgleichsgefäß können während der Herstellung im Sensor verbliebene Luftblasen entweichen, so daß die Funktion des Sensors nicht beeinflußt wird. Ferner dient die im Ausgleichsgefäß vorhandene Gasblase auch gleichzeitig zum Druckausgleich des Dämpfungsmediums über einen großen Temperaturbereich. Ist das Pendel wenigstens teilweise aus magnetischem Material aufgebaut, so kann die seismische Masse mit Hilfe von im Gehäuse angeordneten Spulen ausgelenkt werden, so daß eine Überprüfung des Sensors sowohl vor dem Einbau ins Fahrzeug als auch zu einem beliebigen Zeitpunkt im eingebauten Zustand überprüft werden kann.

Durch die in den Unteransprüchen aufgeführten Maßnahmen sind vorteilhafte Weiterbildungen der im Hauptanspruch angegebenen Vorrichtung möglich.

## Zeichnung

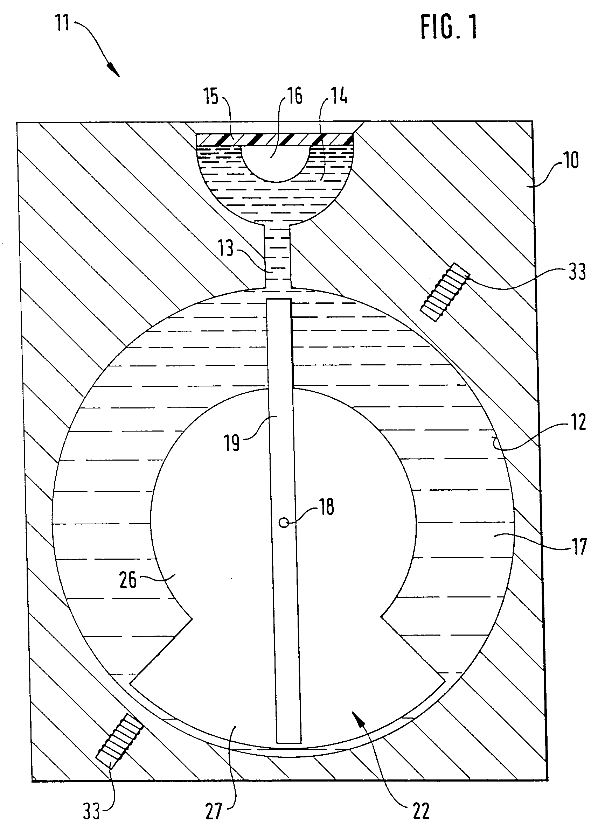

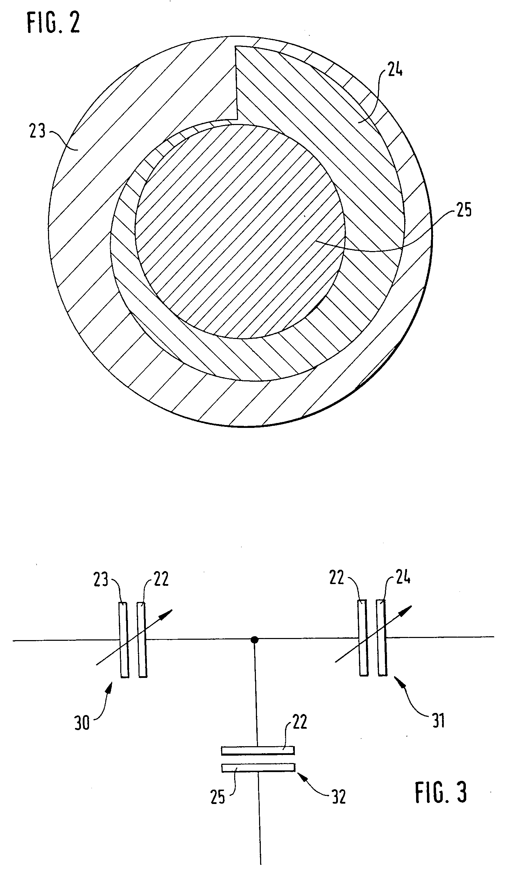

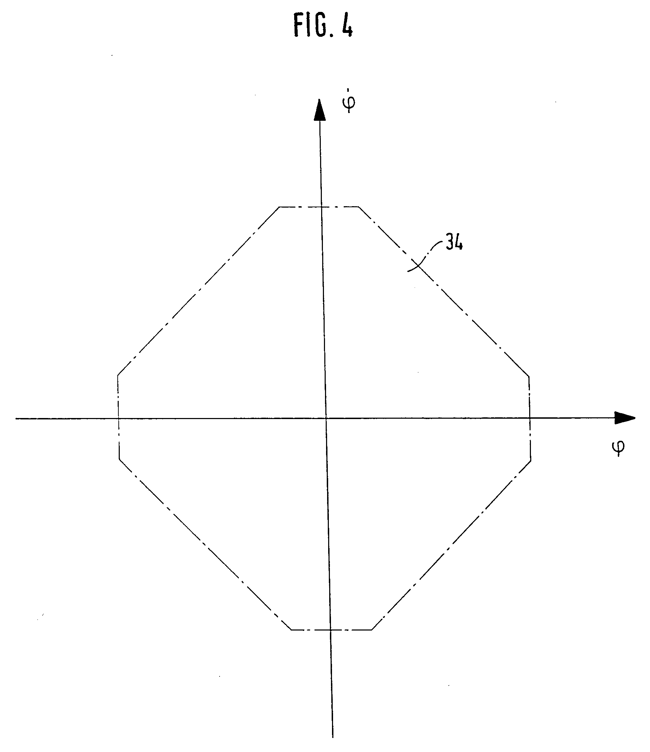

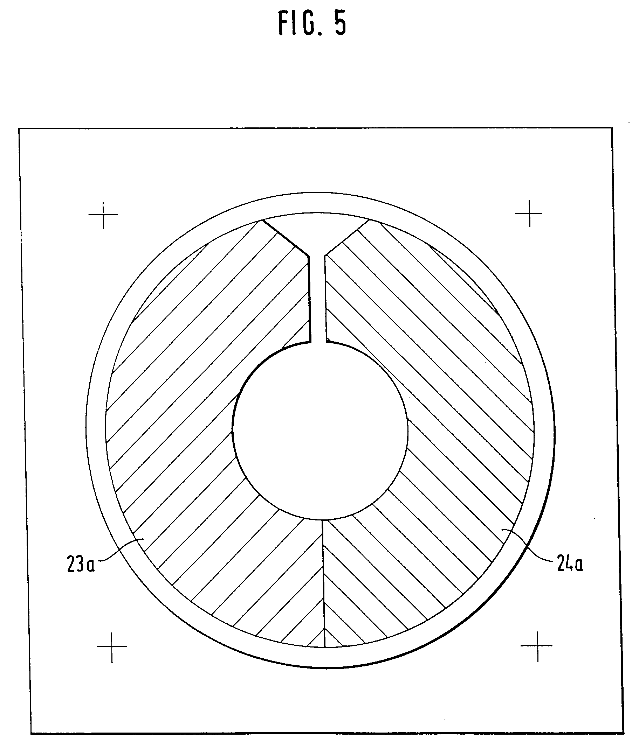

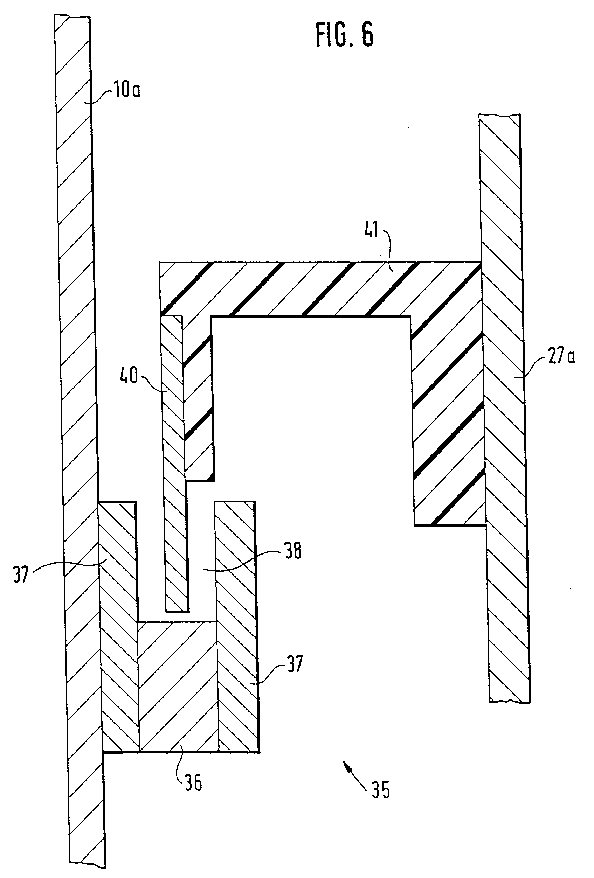

Ein Ausführungsbeispiel der Erfindung ist in der Zeichnung dargestellt und in der nachfolgenden Beschreibung näher erläutert. Es zeigen Figur 1 einen Längsschnitt durch einen Sensor in vereinfachter Darstellung, Figur 2 eine Ausbildung der an der Innenseite des Gehäuses angebrachten Elektroden, Figur 3 ein zu Figur 2 gehöriges elektrisches Ersatzschaltbild der Elektroden und Figur 4 ein Zustandsdiagramm des Sensors, wobei die Drehgeschwindigkeit $\dot{\phi}$ über den Neigungswinkel $\phi$ des Fahrzeuges aufgetragen ist, Figur 5 eine Abwandlung der Elektrodenkonfiguration und Figur 6 eine schematische Teildarstellung einer Dämpfung mit Hilfe einer Wirbelstrombremse.

## Beschreibung des Ausführungsbeispiels

In der Figur 1 ist mit 10 das Gehäuse eines Sensors 11 bezeichnet, das einen rotationssymmetrisch ausgebildeten Innenraum 12 aufweist. Dieser Innenraum 12 ist mit Hilfe eines Durchgangs 13 mit einem Ausgleichsgefäß 14 verbunden. Eine Membran 15 schließt das Ausgleichsgefäß 14 und mittelbar auch den Innenraum 12 gegenüber der Umwelt ab. Der Innenraum 12, der Durchgang 13 und das Ausgleichsgefäß 14 ist bis auf eine möglichst kleine Luftblase 16 mit einer Dämpfungsflüssigkeit 17 gefüllt. Für eine einwandfreie Funktion des Sensors 11 ist es wichtig, daß vor allem der Innenraum 12 vollständig mit der Dämpfungsflüssigkeit 17 gefüllt ist. Etwa im Mittelpunkt des Innenraums 12 ist an einer Befestigung 18 ein als seismische Masse dienendes Pendel 19 aufgehängt. Das Pendel 19 ist um diese Befestigung 18 drehbar. Ferner ist am Pendel 19 die Gegenelektrode 22 angebracht, die mit drei an der Innenwand des Gehäuses angeordneten Elektroden 23, 24, 25 in Wirkverbindung steht. Die Gegenelektrode 22 besteht aus einer Scheibe 26 und einem segementartig ausgebildeten Fortsatz 27. Der Mittelpunkt der Scheibe 26 der Gegenelektrode 22 fällt mit der Befestigung 18 zusammen. Die Gegenelektrode 22 und das Pendel 19 bilden zusammen die seismische Masse des Sensors 11. Da die seismische Masse nicht vollständig achssymmetrisch zur Befestigung 18, die die Drehachse bildet, aufgebaut ist, richtet sich die seismische Masse in der Ruhestellung des Sensors 11 in Richtung des sogenannten Scheinlots aus. Unter dem Scheinlot versteht man die Richtung der Summe aller Kräfte, die auf die seismische Masse wirken und senkrecht auf der Drehachse der seismischen Masse stehen. In der Ruhelage fallen Scheinlot und die Richtung der Erdanziehungskraft zusammen. Um eine niedrige Schwingungsfrequenz der seismischen Masse zu erreichen, sollen sich das spezifische Gewicht der Dämpfungsflüssigkeit 17, die den Innenraum 12 vollständig ausfüllt, und das spezifische Gewicht der seismischen Masse nicht sehr unterscheiden.

Der Innenraum 12 kann ebenfalls als Quader oder in einer sonstigen Form ausgebildet sein. Wichtig ist, daß der Innenraum aber derart gestaltet ist, daß bei einer Rotation des Gehäuses um den Aufhängepunkt der seismischen Masse die Dämpfungsflüssigkeit um die seismische Masse praktisch absolut in Ruhe bleibt. Dies wird dadurch erreicht, daß der Durchmesser des Innenraums 12 des Gehäuses 10 in jeder Richtung gesehen größer ist als die Länge des Pendels 19, und die sich an der Innenwand ausbildende Grenzschicht der Dämpfungsflüssigkeit 17. Bei der Dimensionierung des Gehäuses 10 des Sensors 11 ist man bestrebt, möglichst klein zu bauen. Die Länge des Pendels, seine Form und das Gewicht der gesamten seismischen Masse bestimmen in Verbindung mit der gewünschten Dämpfung die Auswahl der Flüssigkeit.

In der Figur 2 sind die Elektroden 23, 24, 25, die mit der Gegenelektrode 22 drei Kondensatoren 30, 31, 32 bilden, näher dargestellt. Die Elektroden 23, 24, 25 sind auf der der Gegenelektrode 22 zugewandten Innenwand des Gehäuses 10 ausgebildet. Die Darstellungen in den Figuren 1 und 2 haben denselben Maßstab. Die Elektrode 25 ist scheibenförmig ausgebildet und stimmt mit ihrer Fläche nahezu mit der Scheibe 26 der Gegenelektrode 22 überein. Dabei fallen die Mittelpunkte der Elektrode 25 und der Scheibe 26 zusammen. Die Flächen der Elektrode 25 und der Gegenelektrode 22 sind somit so aufeinander abgestimmt, daß unabhängig von der Lage der seismischen Masse, das heißt ob im Ruhezustand oder im ausgelenkten Zustand, immer die gleiche Fläche der Elektrode 25 überdeckt ist. Um die Elektrode 25 herum sind in einer sehr kompakten Bauweise die Elektroden 23 und 24 angeordnet. Die Flächen dieser Elektroden 23, 24 verändern sich gegensinnig. Wie in der Figur 2 dargestellt, haben deshalb die Elektroden 23 und 24 eine sichelförmige Kontur. Dabei hat die Elektrode 24 bedingt durch die scheibenförmig Gestalt der Elektrode 25 eine kreisförmige Innenkontur und mit der Elektrode 23 eine Grenzlinie, deren Radius kontinuierlich zunimmt. Die Außenkontur der Elektrode 23 ist ebenfalls kreisförmig ausgebildet, wobei der Mittelpunkt mit dem Mittelpunkt der Elektrode 25 zusammenfällt.

In der Figur 3 ist das zugehörige elektrische Schaltbild dargestellt. Hierbei sind die Kondensatoren 30, 31, 32 in einer Sternschaltung verschaltet, so daß das Meßsignal des Sensors 11 in einer Differentialschaltung ausgewertet werden kann.

Ferner sind im Gehäuse 10 des Sensors 11 zwei diametral gegenüber liegende Spulen 33 angeordnet. Ist das Pendel aus magnetischem Material aufgebaut oder weist es eine Oberfläche aus magnetischem Material auf, so kann mit Hilfe der stromdurchflossenen Spulen 27 der Sensor vor dem Einbau ins Fahrzeug oder während des Betriebs ausgelenkt werden. Dadurch kann die Funktion des Sensors 11 jederzeit überprüft werden. Dabei ist sowohl eine Überprüfung der mechanischen Funktion des Pendels 19 möglich, als auch eine Kontrolle, ob noch genügend Flüssigkeit im Innenraum 12 vorhanden ist. Abhängig vom Meßsignal, das durch die Anregung des Pendels 19 mit Hilfe der Spulen 37 erzeugt wird, kann auf die Funktionsfähigkeit des Sensors 11 geschlossen werden.

Wird das Fahrzeug, in dem der Sensor 11 mit seinem Gehäuse 10 ortsfest befestigt ist, um einen bestimmten Neigungswinkel gekippt, so wird das Pendel 19 in seiner Befestigung 18 relativ gegenüber dem Gehäuse 10 verdreht. Dabei ist das Pendel 19 stets in Richtung des Scheinlots ausgerichtet. Während des Kippens des Fahrzeugs fällt nun die Richtung der Senkrechten auf der Roll- bzw. Nickachse des Fahrzeugs und das Scheinlot nicht mehr zusammen. Die dadurch entstehende Abweichung, das heißt der Winkel zwischen dieser Senkrechten und dem Scheinlot, ist ein Maß für die hervorgerufene Neigung des Fahrzeugs. Das Verhalten des Pendels 19, das heißt daß es nahezu raumfest bei Drehung des Sensors 11 stehen bleibt, wird bedingt durch die Trägheit der Flüssigkeit 17 und des Pendels 19 und der frei drehbaren Lagerung des Pendels 19. Das Pendel 19 wird nur bedingt durch die Reibung im Lager der Befestigung 18 und durch die Reibung zwischen der Flüssigkeit 17 und der Gehäuseinnenwand geringfügig mitbeschleunigt. In wie weit das Pendel 19 dabei mitbeschleunigt wird, wird durch die Reibung im Lager der Befestigung 18 und durch die Viskosität der Flüssigkeit 17 beeinflußt. Je geringer diese Reibungsverluste sind, desto empfindlicher reagiert das Pendel 19 und somit der Sensor 11 auf langsame Änderungen der Lage des zu überwachenden Fahrzeugs.

Aufgrund dieser Auslenkung des Sensors 11 wird auch die relative Lage der Gegenelektrode 11 zu den Elektroden 23 und 24 verändert. Mit Hilfe des Fortsatzes 27 der Gegenelektrode 22 wird das Überdeckungsverhältnis zwischen der Gegenelektrode 22 und den Elektroden 23 und 24 verändert. Aufgrund der gegensinnigen Ausbildung der Elektroden 23, 24 verändert sich das Überdeckungsverhältnis gegenüber der Elektrode 23 und der Elektrode 24 jeweils um denselben Betrag aber mit unterschiedlichem Vorzeichen. Da das Meßsignal nur in einem Winkelbereich < 360° und abhängig von der speziellen Form der Gegenelektrode 22 eindeutig ist, ist die Bewegungsfreiheit des Pendels 19 mechanisch auf einen gewünschten Meßbereich beschränkt. Die Meßsignale der beiden Kondensatoren 30 und 31 bzw. des Kondensators 32 sind in einer elektrischen Sternschaltung verschaltet. Eventuell auftretende Fehlereinflüsse werden eliminiert, indem die Fehler beide Kondensatoren 30, 31 in gleicher Weise beaufschlagen und somit die meisten auftretenden Fehlereinflüsse (Abstandsänderung, Temperaturdrift der Dielektrizitätskonstanten) größtenteils verschwinden, während sich die Beträge des Meßsignals verdoppeln. Dieses Meßsignal wird nun zur Auslösung von Insassenschutzvorrichtungen, wie zum Beispiel Gurtstraffer, Warnblinkanlagen oder Airbag verwendet. Beim Einsatz des Sensors bei mit Überrollbügeln ausgerüsteten Fahrzeugen ist noch zusätzlich die Bestimmung der Rotationsgeschwindigkeit notwendig. Das in oben beschriebener Weise ermittelte Meßsignal wird hierzu in bekannter Weise nach der Zeit differenziert. Ein entsprechendes Zustandsdiagramm für die Auslösung von Überrollbügeln ist in der Figur 4 dargestellt. Hierbei ist die ermittelte Rotationsgeschwindigkeit $\dot{\phi}$ des Fahrzeugs über den Winkel $\phi$ gegenüber dem Scheinlot aufgetragen. Befindet sich das Meßsignal außerhalb des strichpunktierten Bereichs 34, so wird ein Sicherheitssystem ausgelöst. Die Grenzlinie des markierten Bereichs 34 stellt dabei den Grenzfall einer Auslösung der Insassenschutzvorrichtungen dar, das heißt dem jeweils noch gerade erlaubten Grenzbereich. Diese Zustandsdiagramme sind dabei abhängig, ob es sich um eine Auslenkung, um eine in Fahrtrichtung des Fahrzeuges, das heißt um seine Rollachse, oder um eine senkrecht zur Fahrtrichtung gerichtete Achse, das heißt um seine Nickachse, handelt. Selbstverständlich ist es dabei möglich, jeweils einen eigenen Sensor zur Erfassung der Neigung des Fahrzeuges um die Rollachse oder um die Nickachse anzuordnen und diese beiden Meßsignale in einer elektronischen Auswerteschaltung entsprechend zu verschalten. Ferner wäre es auch denkbar, nicht nur auf einer Innenwand des Gehäuses 10, wie oben beschrieben, sondern auch auf der gegenüberliegenden Innenwand zusätzliche Elektroden 23, 24, 25 anzuordnen. Dadurch kann die Größe, das heißt, die Amplitude des Meßsignals beeinflußt werden.

Für eine genaue Messung ist es notwendig, daß der Innenraum 12 möglichst vollständig mit einer Flüssigkeit 17 gefüllt ist, wobei keinerlei Luftblasen im Innenraum 12 vorhanden sein sollen. Diese luftblasenfreie Herstellung ist nur in aufwendiger Weise möglich. Befinden sich nun nach der Montage noch Luftblasen im Innenraum 12, so können diese durch den Durchgang 13 in das Ausgleichsgefäß 14 entweichen und stören somit die Strömung der Dämpfungsflüssigkeit 17 nicht. Der Durchgang 13 soll dabei möglichst dünn gestaltet sein, er muß aber mindestens so groß sein, daß die Luftblase trotz der Oberflächenspannung immer aus dem Innenraum 12 in das Ausgleichsgefäß 14 entweichen kann. Man stimmt somit den Durchmesser des Durchgangs 13 auf die aus der Praxis bekannte und zu erwartende Durchmessergröße der Luftblasen und den sich zwischen der Luftblase und der Wand des Durchgangs 13 bildenden Grenzschichtdicke ab. Die sich dadurch im Ausgleichsgefäß 14 ansammelnde Luftblase 16 beeinflußt die Funktion des Sensors nicht mehr. Sie dient aber zum Druckausgleich, wenn sich die Dämpfungsflüssigkeit 17 im Arbeitstemperaturbereich des Sensors 11 ausdehnt. Ferner ist durch die Membran 15, die das Ausdehnungsgefäß 14 abschließt, ein Druckausgleich der Dämpfungsflüssigkeit 17 bei Temperaturschwankungen möglich.

In der Figur 5 wird eine Abwandlung der Elektrodenkonfiguration dargestellt. Während im bisher beschriebenen Ausführungsbeispiel die Elektroden 23, 24 sichelförmig ausgebildet sind und so angeordnet sind, daß ihre Flächen gegensinnig enden, sind in der Figur 5 die Elektroden 23a, 24a spiegelbildlich gleich ausgebildet. Wichtig ist bei der Formgestaltung der Elektroden 23a, 24a, daß bei der Bewegung des Pendels 22 das Überlappungsverhältnis zwischen der einen Elektrode 23a und dem Segment 27 um denselben Betrag erhöht wird, um den das Überlappungsverhältnis zwischen der anderen Elektrode 24a und dem Segment 27 verkleinert wird, bzw. umgekehrt. Hierzu sind die Elektroden in der Figur 5 als Segment ausgebildet, wobei die Mittelpunkte des inneren und des äußeren Radius zusammenfallen und diese wiederum insbesondere mit dem Mittelpunkt der Elektrode 25 zusammenfallen. Die Wirkungsweise dieses Ausführungsbeispiels ist sinngemäß vom obigen Ausführungsbeispiel übertragbar. Für den zu bestimmenden Drehwinkel ist hierbei die Größe des Segments 27 ausschlaggebend.

Mit Hilfe der Flüssigkeit 17 wurde, wie in der Figur 1 dargestellt, das Pendel 26 gedämpft. Für die Funktion des Sensors selbst ist aber eine Flüssigkeit nicht zwingend notwendig. Das Pendel kann auch anders gedämpft werden, so zum Beispiel mit einer in der Figur 6 dargestellten Wirbelstrombremse 35. Die Flüssigkeit 17 hat beim Sensor die Aufgaben, durch eine Vergrößerung der trägen Masse des Pendels 26 eine möglichst kleine Eigenfrequenz des Pendels 26 zu erreichen und die viskose Dämpfung der Bewegung des Pendels 26 zu steigern. Die Eigenfrequenz des Pendels 26 ist vom Abstand zwischen dem Schwerpunkt des Pendels 26 und dem Drehpunkt des Pendels 26 abhängig. Dieser kann rein konstruktiv durch eine entsprechende Formgebung des Pendels auf einen bestimmten, gewünschten Wert eingestellt werden.

Die spezielle Form des Pendels selbst hat auf die Funktion des Pendels keinen unmittelbaren Einfluß. Deshalb sind verschiedene Pendelformen möglich, die funktionell aber identisch sind.

Durch den Auftrieb bewirkt die Flüssigkeit ferner, daß ein eingestellter Abstand zwischen dem Schwerpunkt und dem Drehpunkt des Pendels zusätzlich noch etwas verringert wird und damit die Eigenfrequenz des Pendels kleiner wird. Dieser Effekt wirkt sich zwar günstig auf die Meßsignalgewinnung aus, ist aber für die eigentliche Funktion des Pendels selbst nicht wesentlich.

Die dynamischen Eigenschaften des Pendels sind von der viskosen Dämpfung des Pendels abhängig. Diese Dämpfung des Pendels kann sowohl mit Hilfe einer Flüssigkeit als auch mit einer Wirbelstrombremse eingestellt werden. Mit Hilfe einer Wirbelstrombremse ist zusätzlich ein viel größerer Dämpfungsbereich als bei einer Flüssigkeit möglich, und ferner ist die Dämpfung weniger temperaturabhängig.

Die Wirbelstrombremse 35 besteht aus einem Magneten 36 der zwischen zwei Weicheisenteilen 37 angeordnet ist. Als Magnet 36 kann sowohl ein Permanentmagent als auch ein Elektromagnet verwendet werden. Wird ein Elektromagnet eingesetzt, so hat dies den Vorteil, daß der Sensor zu einem beliebigen Zeitpunkt in seiner Funktionsfähigkeit überprüft werden kann. Die Weicheisenteile 37 sind länger als der Magnet 36, so daß sich zwischen diesen Teilen 37 ein Luftspalt 38 bildet. Die beiden Weicheisenteile 37 sind als Ringe ausgebildet, wobei ein Weicheisenteil an der Wand des Gehäuses 10a befestigt ist. In den Luftspalt 38 ragt ein Fortsatz 40 aus metallischem Werkstoff, zum Beispiel Kupfer, der mit Hilfe eines Trägers 41 am Segment 27a des Pendels 26 befestigt ist. In bekannter Weise bildet sich das vom Magneten 36 bewirkte Magnetfeld im Luftspalt 38 zwischen den beiden Weicheisenteilen 37 aus. Während der Auslenkung des Pendels 26 wird proportional dazu der Fortsatz 40 im Magnetfeld, d.h. im Luftspalt zwischen den beiden Weicheisenteilen 37 bewegt. Die durch die Bewegung des Fortsatzes 40 im Magnetfeld induzierten Wirbelströme behindern die Bewegung des Fortsatzes 40 und bewirken dadurch eine Dämpfung des Pendels 26.

**Patentansprüche**

1. Sensor (11), insbesondere zum selbsttätigen Auslösen von Insassenschutzvorrichtungen in Kraftfahrzeugen bei einem Unfall, mit einem Gehäuse (10), in dessen Innenraum sich als seismische Masse ein Körper (19, 22) befindet, der bei Angriff einer Beschleunigung ausgelenkt wird und dabei zugleich gedämpft wird, dadurch gekennzeichnet, daß an der Gehäusewand mindestens eine erste (23) und mindestens eine zweite Elektrode (24), die nahezu gleiche Flächen aufweisen, und mindestens eine dritte Elektrode (25) angeordnet sind, und daß am Körper (19) eine Gegenelektrode (22) mit einem Fortsatz (27) so ausgebildet ist, daß unabhängig von der Lage des Körpers (19) immer die gleiche Fläche der dritten Elektrode (25) überdeckt ist und das Überdeckungsverhältnis zu den beiden anderen Elektroden (23, 24) mit Hilfe des Fortsatzes (27) verändert wird.

2. Sensor nach Anspruch 1, dadurch gekennzeichnet, daß sich die Flächen der ersten und der zweiten Elektrode (23, 24) gegensinnig verändern.

3. Sensor nach Anspruch 2, dadurch gekennzeichnet, daß die erste und die zweite Elektrode (23, 24) sichelförmig ausgebildet sind.

4. Sensor nach Anspruch 1, dadurch gekennzeichnet, daß die erste und die zweite Elektrode (23a, 24a) segmentartig ausgebildet sind.

5. Sensor nach einem der Ansprüche 1 bis 4, dadurch gekennzeichnet, daß die Gegenelektrode (22) einen scheibenförmigen Bereich (26) mit einem segmentartigen Fortsatz (27) aufweist.

6. Sensor nach einem der Ansprüche 1 bis 5, dadurch gekennzeichnet, daß die drei Elektroden (23, 24, 25) und die Gegenelektrode (22) parallel zueinander angeordnet sind.

7. Sensor nach einem der Ansprüche 1 bis 6, dadurch gekennzeichnet, daß die drei Elektroden (23, 24, 25) sich auf einer Innenwand des Gehäuses (10) befinden und daß die dritte Elektrode (25) von den anderen Elektroden (23, 24) umgeben ist.

8. Sensor nach einem der Ansprüche 1 bis 7, dadurch gekennzeichnet, daß der von der ersten Elektrode (23) und der Gegenelektrode (22) gebildete Kondensator (30) und der von der zweiten Elektrode (24) und der Gegenelektrode (22) gebildete Kondensator (31) und der von der dritten Elektrode (25) und der Gegenelektrode (22) gebildete Kondensator (32) in einer elektrischen Sternschaltung verschaltet sind.

9. Sensor nach einem der Ansprüche 1 bis 8, dadurch gekennzeichnet, daß eine die Dämpfung bewirkende Flüsigkeit (17) einen Raum (12) des Gehäuses (10) völlig ausfüllt.

10. Sensor nach Anspruch 9, dadurch gekennzeichnet, daß der Innenraum (12) des Gehäuses (10) mit Hilfe eines Durchgangs (13) mit einem durch eine Membran (15) abgeschlossenen Ausgleichsgefäß (14) für die Dämpfungsflüssigkeit (17) verbunden ist.

11. Sensor nach Anspruch 10, dadurch gekennzeichnet, daß der Durchmesser des Durchgangs (13) mindestens die Breite der in der Dämpfungsflüssigkeit (17) eingeschlossenen Luftblase (16) hat.

12. Sensor nach einem der Ansprüche 1 bis 8, dadurch gekennzeichnet, daß die Dämpfung mit Hilfe einer Wirbelstrombremse (35) bewirkt wird.

13. Sensor nach einem der Ansprüche 1 bis 12, dadurch gekennzeichnet, daß der Körper (19) wenigstens teilweise aus magnetischem Material besteht und mit Hilfe mindestens einer im Gehäuse (10) angeordneten Spule (27) in Wirkverbindung steht.

FIG. 1

FIG. 2

FIG. 3

# FIG. 4

# FIG. 5

# FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y D | DE-A-3 604 216 (ROBERT BOSCH GMBH) <br> * Spalte 3, Zeile 23 - Spalte 4, Zeile 22; Abbildungen 1,2,2A * <br> --- | 1,4-9 | G01P15/125 |
| Y | FR-A-2 156 985 (M.J.F.HERVE) <br> * Seite 1, Zeile 24 - Zeile 29 * <br> * Seite 2, Zeile 8 - Zeile 14; Abbildung 2 * <br> --- | 1,4-9 | |
| A | US-A-3 363 470 (R.O.YAVNE) <br> * Spalte 2, Zeile 59 - Zeile 65 * <br> * Spalte 3, Zeile 43 - Zeile 52; Abbildung 2 * <br> --- | 10,11 | |
| A | WO-A-8 706 347 (ROBERT BOSCH GMBH) <br> * Seite 3, Zeile 8 - Zeile 9; Abbildungen 1-3 * <br> --- | 12 | |
| A | DE-A-4 027 046 (SIEMENS AG) <br> * Spalte 2, Zeile 8 - Zeile 20; Abbildungen 1-3 * * | 13 | |
| | ----- | | **RECHERCHIERTE SACHGEBIETE (Int. Cl.5 )** <br><br> G01P |

Der vorliegende Recherchenbericht wurde für alle Patentansprüche erstellt

| Recherchenort | Abschlußdatum der Recherche | Prüfer |
|---|---|---|
| DEN HAAG | 06 AUGUST 1992 | HANSEN P. |